# EUROPÄISCHE PATENTSCHRIFT

(11) **EP 4 030 513 B1**
(45) Veröffentlichungstag und Bekanntmachung des Hinweises auf die Patenterteilung: **28.10.2026**
(21) Anmeldenummer: 22160287.3
(22) Anmeldetag: 28.04.2016
(51) Int. Cl.: H01M 10/54, H01M 6/52, C22B 13/00, C22B 1/00, B09B 3/70

(54) **VERFAHREN ZUM BEHANDELN GEBRAUCHTER BATTERIEN, INSBESONDERE WIEDER AUFLADBARER BATTERIEN UND BATTERIE-VERARBEITUNGSANLAGE**
RECYCLING METHOD FOR TREATING USED BATTERIES, IN PARTICULAR RECHARGEABLE BATTERIES AND BATTERY PROCESSING INSTALLATION
PROCÉDÉ DE TRAITEMENT DES BATTERIES USAGÉES, EN PARTICULIER DES BATTERIES RECHARGEABLES ET INSTALLATION DE TRAITEMENT DES BATTERIES

(30) Priorität: 28.04.2015 DE 102015207843
(43) Veröffentlichungstag der Anmeldung: 20.07.2022
(62) Dokumentnummer(n) der früheren Anmeldung(en) nach Art. 76 EPÜ: 20175028.8 / 3 716 380; 16719400.0 / 3 289 627
(73) Patentinhaber: Duesenfeld GmbH, 38176 Wendeburg (DE)
(72) Erfinder: HANISCH, Christian, 38118 Braunschweig (DE); WESTPHAL, Bastian, 38106 Braunschweig (DE); HASELRIEDER, Wolfgang, 38114 Braunschweig (DE); SCHOENITZ, Martin, 38106 Braunschweig (DE)
(74) Vertreter: Gramm, Lins & Partner Patent- und Rechtsanwälte PartGmbB

(56) Entgegenhaltungen:
- WO-A1-2010/102377
- CN-A- 1 438 729
- DE-A1- 102011 110 083
- DE-A1- 4 424 825
- US-A- 5 632 863
- US-A1- 2003 186 110
- US-B2- 8 210 456

## Beschreibung

Die Erfindung betrifft ein Verfahren zum Behandeln gebrauchter Batterien, insbesondere gebrauchter Lithium-Batterien, beispielsweise Lithium-Ionen-Batterien, gemäß dem Oberbegriff von Anspruch 1.

Gemäß einem zweiten Aspekt betrifft die Erfindung eine Batterie-Verarbeitungsanlage zum Behandeln gebrauchter Batterien, insbesondere zum Behandeln gebrauchter Lithium-Batterien, gemäß dem Oberbegriff von Anspruch 7.

Aus der US 2005/0241943 A1 ist ein Verfahren zum Aufarbeiten gebrauchter Batterien bekannt, bei dem die Batterien vor einem Zerkleinerungsschritt erwärmt werden, sodass Kunststoffbestandteile der Batterien zerstört werden. Nachteilig an einem derartigen Vorgehen ist, dass die verbleibenden Komponenten der Batterien mit Abbauprodukten des Kunststoffs verunreinigt sein können.

Aus der DE 10 2012 024 876 A1 ist ein System zum Überführen transportkritischer Elektrolytzellen bekannt, die zunächst unter Inertgas zerkleinert und danach mit einem Desaktivierungspulver bestäubt werden, um eine Selbstentzündung des elektrochemisch aktiven Materials zu verhindern. Nachteilig daran ist, dass das entstehende Material dennoch ein vergleichsweise hohes Gefährdungspotential besitzt und dass das Bestäubungspulver selbst ein Exposionsrisiko darstellt und dass die Bildung einer entzündlichen und explosiven Atmosphäre in dem Transportbehälter nicht ausgeschlossen werden kann.

Aus der DE 10 2011 110 083 A1 ist ein Verfahren zum Wiedergewinnen von Aktivmaterial aus einer galvanischen Zelle bekannt, bei dem die galvanischen Zellen zunächst mechanisch zerkleinert, dann vorgetrocknet und nachfolgend gesichtet werden. Schließlich wird der Binder in einem Ofen zersetzt. Eine derartige Vorrichtung eignet sich sehr gut zum effizienten Recyceln größerer Mengen von galvanischen Elementen. Für den Teillast-Betrieb ist diese Anlage jedoch vergleichsweise komplex aufgebaut.

In der WO 2010/102377 A1 und der US 8,210,456 B2 sind Verfahren beschrieben, bei denen die zu rezyklierenden Batterien, beispielsweise Lithium-Batterien, in einem Drehrohrofen erhitzt und die entstehenden Gase abgesaugt werden. Nachteilig an diesen Verfahren ist, dass der Elektrolyt so nur schlecht wiederverwertet werden kann und große Mengen Fluorwasserstoff sowie fluororganische Verbindungen entstehen können.

Die DE 44 24 825 A1 beschreibt ein Verfahren zum Entsorgen von entladenen und geladenen Lithium enthaltenden Batterien, das ein Zerkleinern der Batterien durch eine Schreddereinrichtung umfasst. Vor dem Schreddern werden die Batterien auf eine solche tiefe Temperatur abgekühlt, dass eine chemische Reaktion der vom Metallgehäuse wenigstens teilweise befreiten Inhaltsstoffe bei normalen Temperatur- und Druckbedingungen und Sauerstoffeinwirkung im Wesentlichen nicht mehr stattfindet.

Die US 2003/0186110 A1 bezieht sich auf ein Verfahren zur Entfernung eines Elektrolyten aus Akkumulatoren mittels eines überkritischen Fuids. Es wird flüssiges Medium zu Akkumulatoren in einem Behälter gegeben und Temperatur und/oder Druck so eingestellt, dass die Flüssigkeit überkritisch wird. Nach dem Entfernen der superkritischen Flüssigkeit wird diese in den gasförmigen Zustand überführt und der Elektrolyt abgeschieden.

Die US 5 632 863 beschreibt ein pyrometallurgisches Verfahren, bei dem Akkumulatoren zunächst zerkleinert und danach in einem Ofen auf so hohe Temperatur erhitzt werden, dass sie sich zersetzen.

Die CN1438729 beschreibt ein Verfahren, bei dem Batterien unter Vakuum zerkleinert werden. Das so erzeugte Zerkleinerungsmaterial wird durch Einbringen in Wasser eingebracht und Feststoffe abgefiltert.

Der Erfindung liegt die Aufgabe zugrunde, Nachteile im Stand der Technik zu vermindern.

Die Erfindung löst das Problem durch ein Verfahren mit den Merkmalen von Anspruch 1. Gemäß einem zweiten Aspekt löst die Erfindung das Problem durch eine Batterie-Verarbeitungsanlage mit den Merkmalen von Anspruch 7.

Vorteilhaft an der Erfindung ist, dass durch das Trocknen dem Zerkleinerungsgut so viel Elektrolyt entzogen werden kann, dass eine elektrochemische Reaktion nicht mehr oder nur noch zu vernachlässigbar kleinem Ausmaß möglich ist. Zudem bildet sich keine entzündliche oder explosive Gasphase über den Batteriefragmenten, da diesen insbesondere die organischen Karbonate des Elektrolyten entzogen wurden. Das Zerkleinerungsgut ist daher weitgehend inert und kann, insbesondere dann, wenn es unter Vakuum verpackt wird, sicher transportiert werden.

Ein weiterer Vorteil ist es, dass zum Inaktivieren des Zerkleinerungsmaterials kein zusätzliches Material hinzugegeben werden muss. Das verringert den Aufwand beim Aufarbeiten der Batterien, verringert das Gewicht des inaktivierten Zerkleinerungsguts und erhöht die Reinheit in den folgenden Trenn- und Recyclingschritten. Insbesondere in potentiell folgenden hydrometallurgischen Aufarbeitungsschritten ist eine hohe Produktreinheit ohne Eintrag von Fremdionen vorteilhaft.

Vorteilhaft ist zudem, dass ein transportsicheres Zerkleinerungsgut erhalten wird. So ist der Gehalt an organischen Carbonaten vorzugsweise so klein, dass die Bildung von Fluorophosphaten in relevanter Menge ausgeschlossen werden kann. Fluorophosphate sind oft starke Nervengifte, deren Bildung sicher verhindert werden muss. Zudem ist sichergestellt, dass es aufgrund des geringen Elektrolytgehalts nicht zu einer durch eine elektrochemische Reaktion ausgelöste, selbstverstärkend fortschreitende Wärmeentwicklung kommen kann. Im Rahmen der vorliegenden Beschreibung wird unter dem Trocknen insbesondere das Entfernen zumindest eines Lösungsmittels des Leitsalzes verstanden. Insbesondere wird das Trocknen so durchgeführt, dass Kohlensäuredimethylester und/oder Kohlensäureethylmethylester entfernt wird.

Unter der Batterie wird insbesondere eine Lithium-Batterie verstanden. Eine Lithium-Batterie ist ein Akkumulator, bei dem die elektrochemische Reaktion Lithium und/oder Lithium-Ionen und/oder eine Lithium-Verbindung involviert. Unter einer Batterie-Verarbeitungsanlage wird insbesondere auch eine Akku-Verarbeitungsanlage zum Verarbeiten von Akkumulatoren verstanden.

Unter dem Transportbehälter wird insbesondere auch eine oder eine Transportverpackung verstanden. Vorzugsweise wird die Transportverpackung durch Vakuumverschweißung verschlossen. Gut geeignet als Transportverpackung ist insbesondere Aluminium-Verbundfolie.

Erfindungsgemäß erfolgt das Trocknen nach dem Zerkleinern der Batterien .

Zwar ist es möglich, stellt aber keine Ausführungsform der Erfindung dar, dass die Batterien im unzerkleinerten Zustand einem Vakuum ausgesetzt werden, sodass zumindest Teile des Elektrolyten verdampfen, wobei das entstehende Gas entweder durch ein Sicherheitsventil im Akkumulator entweicht oder die Batterie durch die Druckdifferenz zwischen der äußeren Umgebung und dem Innendruck zerstört wird, sodass verdampfender Elektrolyt austreten kann. Da der Elektrolyt zumeist zwischen eng gewickelten oder gestapelten und verpressten Schichten aus Elektroden und Separator und in deren Poren vorliegt und mit anderen Bestandteilen der Batterien verbunden vorliegt, kann dieses Vorgehen jedoch zeitintensiv sein. Es ist daher oft günstiger und stellt eine bevorzugte Ausführungsform der Erfindung dar, dass die Batterien mechanisch zerkleinert werden, beispielsweise durch Schneiden, Scheren, Pralleinwirkung, Zertrennen und/oder Quetschen. So steht für den Stoffübergang in die Gasphase eine größere Grenzfläche zur Verfügung.

Das Trocknen kann beispielsweise durch Vakuumtrocknung, Kontakttrocknung, Konvektionstrocknung und/oder Strahlungstrocknung erfolgen. Günstig ist es, wenn das Trocknen unter Rühren und/oder Umwälzen des Zerkleinerungsguts erfolgt.

Vor dem Zerkleinern werden die gebrauchten Batterien vorzugsweise demontiert. Das heißt, dass größere Batteriesysteme in ihre kleineren Unterbausteine, die Module oder Stacks, demontiert werden oder sogar die Zellen, die das elektrochemisch wirksame Material enthalten, von der Ansteuerelektronik getrennt werden. Die Ansteuerelektronik umfasst beispielsweise Halbleiterbauelemente und/oder Sensoren und dient der Ladesteuerung der Batterien.

Erfindungsgemäß erfolgt das Trocknen unter Vakuum. Vorzugweise ist das Vakuum so groß gewählt, dass der Dampfdruck von Kohlensäuredimethylester bei 80°C, insbesondere bei 70°C, unterschritten wird.

Erfindungsgemäß ist es, wenn das Trocknen unter einem Druck von höchstens 300 hPa, insbesondere höchstens 100 hPa erfolgt. Bei so niedrigen Drücken verdampfen wesentliche Bestandteile der meisten Elektrolyten, insbesondere Kohlensäuredimethylester und Kohlensäureethylmethylester, bereits bei Temperaturen von weniger als 80°C. Niedrige Temperaturen haben den Vorteil, dass die Bildung von Fluorwasserstoff behindert wird. Fluorwasserstoff stellt eine potentielle Gefährdung für die Batterie-Verarbeitungsanlage sowie die Umgebung dar. Es ist daher günstig, das Entstehen von Fluorwasserstoff zu verhindern.

Vorzugsweise erfolgt das Trocknen bei einer Temperatur, die unterhalb einer Zersetzungstemperatur liegt. Unter der Zersetzungstemperatur wird insbesondere die kleinste Temperatur verstanden, für die gilt, dass nach dem Halten des Zerkleinerungsguts auf dieser Temperatur für eine Stunde zumindest 80 Masseprozent des Binders sich in gasförmige Bestandteile zersetzt haben. Die Zersetzungstemperatur kann damit gemessen werden, indem die Temperatur des Zerkleinerungsguts sukzessive erhöht wird und erfasst wird, wann es zu einem Masseverlust, insbesondere durch Gasentwicklung aufgrund einer Zersetzung des Binders, kommt und das angegebene Kriterium erfüllt ist. Gegebenenfalls muss der Versuch mit jeweils einer neuen Probe an Zerkleinerungsgut bei jeweils erhöhter Temperatur mehrfach durchgeführt werden.

Günstig ist es, wenn das Trocknen unter einer Atmosphäre erfolgt, in der der Wasser-Partialdruck kleiner ist als 50 Pa, insbesondere kleiner als 10 Pa. Ein geringer Wasser-Partialdruck führt zu einer geringen Reaktionsrate von Lithium-Verbindungen zu Lithium-Hydroxid und damit zu nur geringer Wasserstoff-Entwicklung. Das verhindert die Bildung von zündfähigen Wasserstoff-Sauerstoff-Gemischen und trägt zur Anlagensicherheit bei.

Günstig ist es zudem, wenn der Sauerstoff-Partialdruck höchstens 10 Millibar, insbesondere höchstens 5 Millibar beträgt. Die Reaktion von Sauerstoff mit oxidierbaren Bestandteilen der Batterien wird so weitgehend unterdrückt. Es ist möglich, den niedrigen Sauerstoff-Partialdruck durch einen geringen Druck beim Trocknen zu erreichen. Alternativ oder zusätzlich kann das Trocknen in einer Inertgas-Atmosphäre erfolgen.

Erfindungsgemäß ist ein Verfahren, bei dem das Trocknen des Zerkleinerungsguts erst beendet wird, wenn sich nach Beenden des Trocknens kein entzündliches oder explosives Gasgemisch über dem abgefüllten Zerkleinerungsgut mehr bilden kann und/oder wenn das Zerkleinerungsgut so trocken ist, dass sich im Transportbehälter oder während der Weiterverarbeitung ein entzündliches oder explosives Gasgemisch ergeben kann. Unter dem Merkmal, dass das Trocknen beendet wird, wenn sich nach Beenden des Trocknens kein entzündliches oder explosives Gasgemisch über dem abgefüllten Zerkleinerungsgut bilden kann, wird insbesondere verstanden, dass sich in einem Transportbehälter in Form eines 50-Literbehälter, der zur Hälfte (bezogen auf sein Volumen) mit dem Zerkleinerungsgut gefüllt ist, innerhalb von einer Woche bei 50°C und 1013 hPa kein zündfähiges Gasgemisch bildet. Ob das Kriterium erfüllt ist, wird in Vorversuchen ermittelt. Bildet sich ein zündfähiges Gasgemisch, muss das Trocknen länger und/oder bei niedrigerem Druck durchgeführt werden. Die Vorversuche werden so lange wiederholt, bis eine Trocknungsdauer und/oder ein Trocknungsdruck ermittelt ist, bei der das Merkmal bei einem Testsatz von drei Transportbehältern für alle drei Transportbehälter erfüllt ist.

Es wird das Zerkleinerungsgut so lange getrocknet, bis ein Elektrolytgehalt im Zerkleinerungsgut so klein ist, dass eine elektrochemische Reaktion unmöglich ist. In anderen Worten ist der Elektrolytgehalt kleiner als ein Schwellenwert, wobei der Schwellenwert so gewählt ist, dass die Zellspannung bei Unterschreiten dieses Schwellenwerts auf höchstens ein Viertel abgesunken ist. Dieser Schwellenwert wird beispielsweise dadurch bestimmt, dass die Zellenspannung einer Batterie in Abhängigkeit vom Elektrolytgehalt bestimmt wird. Kurz vor dem Erreichen des Schwellenwerts bricht die Zellspannung zusammen, das heißt, dass sie um zumindest 75% absinkt. Ist der Schwellenwert unterschritten, enthält die Batterie so wenig Elektrolyt, dass in guter Näherung keine elektrochemische Reaktion mehr möglich ist.

Vorzugsweise wird das Zerkleinerungsgut so lange getrocknet, dass eine Menge von 50 kg an Zerkleinerungsmaterial, das kompaktiert in einem 50 Liter-Fass enthalten ist, keine oder eine nur so geringe Wärmeentwicklung zeigt, dass ein thermisches Durchgehen, also eine thermisch induzierte Kettenreaktion, für zumindest zwei Monate ausgeschlossen ist und dass eine etwaige WasserstoffEntwicklung zudem so gering ausgebildet ist, dass nach zwei Wochen kein Überdruck entsteht, wenn zu Beginn ein Unterdruck von 500 hPa herrscht.

Günstig ist es, wenn das Zerkleinerungsgut so lange getrocknet wird, bis der Elektrolytgehalt an organischen Komponenten, die bei 80°C flüchtig sind, höchsten 3 Gew.-%, höchstens insbesondere 2 Gew.-%, besonders bevorzugt höchstens 1,5 Gew.-%, beträgt.

Vorzugsweise wird das Trocknen so lange durchgeführt, dass der akkumulierte Gehalt an organischen Karbonaten aus dem Elektrolyten, die bei 80°C flüchtig sind, in der Atmosphäre über dem Zerkleinerungsgut 3 Vol.-% unterschreitet.

Insbesondere wird das Trocknen so lange durchgeführt, bis der Gehalt an Kohlensäuredimethylester 4 Vol.-%, insbesondere 3 Vol.-%, unterschreitet und/oder der Gehalt an Cyclohexylbenzol 1 Vol.-%, insbesondere 0,5 Vol.-%, unterschreitet.

Vorzugsweise erfolgt das Trocknen unmittelbar nach dem Zerkleinern. Hierunter wird insbesondere verstanden, dass zwischen dem Beginn des Zerkleinerns der Batterien und dem Zeitpunkt, zu dem zumindest ein Teil des dadurch entstandenen Zerkleinerungsguts anfängt zu Trocknen, höchstens fünf Minuten beträgt, insbesondere höchstens eine Minute. Durch die schnelle Trocknung nach dem Zerkleinern wird die Masse an Material klein gehalten, die potentiell elektrochemisch reagieren könnte, zudem wird die elektrochemische Reaktionszeit potentieller exothermer Reaktionen klein gehalten. Das senkt das Risiko für die Anlage und die Umgebung.

Besonders günstig ist es, wenn das Vakuum mittels einer Strahlpumpe erzeugt wird. Strahlpumpen sind, insbesondere bei geeigneter Wahl des Strahlmediums, weitgehend unempfindlich gegen aggressive abzupumpende Gase. Günstig ist es, wenn das Strahlmedium, das eine Flüssigkeit ist, einen pH-Wert von zumindest 8, insbesondere von zumindest 9, beispielsweise zumindest 12, hat. In diesem Fall können sich unerwünschte Bestandteile des Gases, das abgepumpt wird, zersetzen oder zu weniger schädlichen Substanzen reagieren. So kann beispielsweise Kohlensäuredimethylester und/oder Kohlensäureethylmethylester durch eine Verseifungsreaktion abgebaut werden. Etwaig im Strahlenmedium enthaltener Fluorwasserstoff kann im basischen Milieu in einer Säure-Base-Reaktion zu einem ungefährlichen Salz umgesetzt werden.

Vorzugsweise enthält das Strahlenmedium eine Fluor fällende Substanz. Beispielsweise kann das Strahlenmedium Natriumkarbonat oder Calziumkarbonat enthalten. Die bei der Reaktion mit einer Fluorverbindung, insbesondere Fluorwasserstoff, entstehenden Salze werden vorzugsweise abgetrennt, insbesondere abgefiltert oder aussedimentiert. Auf diese Weise wird zumindest weitgehend verhindert, dass Fluorwasserstoff oder andere giftige fluorhaltige Verbindungen in die Umgebung abgegeben werden können.

Vorzugsweise erfolgt das Trocknen bei einer Temperatur von höchstens 80°C. In diesem Fall entsteht kaum Fluorwasserstoff. Das erhöht die Lebensdauer der Batterie-Verarbeitungsanlage und verringert die Umweltgefährdung.

Gemäß einer bevorzugten Ausführungsform umfasst das Verfahren die Schritte des Kondensierens von Bestandteilen des Elektrolyten durch Abkühlen und/oder Druckerhöhen, sodass ein Elektrolytkondensat entsteht. Beispielsweise wird das Kondensieren an einer Stelle durchgeführt, die bezüglich des Gasflusses zwischen dem Trockner und der Vakuumpumpe liegt. Vom Trockner kommende Gase müssen daher in diesem Fall zunächst einen Kondensator passieren, bevor sie zur Vakuumpumpe gelangen können. Das führt dazu, dass gasförmiger Elektrolyt, der in dem Gas vorliegt, das beim Trocknen entsteht, zumindest zu einem überwiegenden Teil im Kondensator abgeschieden wird, bevor das verbleibende Gas zur Pumpe gelangt. So kann Elektrolyt zurückgewonnen werden. Zudem verringert sich der Gasstrom durch die Vakuumpumpe, was deren Lebensdauer verlängert und deren Energieverbrauch reduziert.

Gemäß einer bevorzugten Ausführungsform umfasst das Verfahren alternativ den Schritt der Gasreinigung durch Adsorption der flüchtigen organischen Bestandteile an einem Aktivkohlfilter vor oder nach der Verdichtereinheit.

Das erfindungsgemäße Verfahren umfasst den Schritt eines Reinigens des Gases, das beim Trocknen entsteht, bevor dieses die Vakuumpumpe erreicht. Das erfolgt dadurch, dass das Gas einen Aktivkohlefilter und/oder einen Filter passiert, in dem mit Fluorwasserstoff reagierende Substanzen enthalten sind, beispielsweise ein Calziumsalz wie Calziumkarbonat oder ein Kaliumsalz wie Kaliumkarbonat.

Vorzugsweise umfasst das erfindungsgemäße Verfahren den Schritt eines Trocknens bei einer Trocken-Temperatur und für eine Trocken-Dauer, die so gewählt sind, dass sich der Binder, der Aktivmaterial der Lithium-Batterie an einen Träger bindet, zumindest zum überwiegenden Teil zersetzt. Günstig ist es, wenn dieser Trocknungsschritt, der auch als Hochtemperatur-Trocknen bezeichnet werden kann, räumlich getrennt von einem ersten, oben beschriebenen Trocknungsschritt durchgeführt wird. Der letztgenannte Trocknungsschritt kann auch als Niedertemperatur-Trocknen bezeichnet werden.

Vorzugsweise wird das Hochtemperatur-Trocknen, bei dem sich der Binder zersetzt, so durchgeführt, dass die entstehenden Zersetzungsgase sich nicht mit den Gasen mischen, die beim Niedrigtemperatur-Trocknen entstehen. Es ist möglich, dass das Hochtemperatur-Trocknen und das Niedertemperatur-Trocknen bei unterschiedlichen Drücken erfolgt. Beispielsweise kann das Hochtemperatur-Trocknen bei Normaldruck erfolgen.

Unter dem Aktivmaterial wird der Stoff verstanden, der beim Betrieb der Batterien elektrochemisch reagiert. Unter dem Träger für das Aktivmaterial wird insbesondere eine Trägerfolie verstanden, auf der das Aktivmaterial in Form von Partikeln aufgebracht ist. Beispielsweise handelt es sich bei der Trägerfolie um eine Folie aus Aluminium oder eine Aluminiumlegierung. Der Binder ist der Stoff, der das Aktivmaterial mit dem Träger verbindet, beispielsweise enthält der Binder Polyvinylidenfluorid.

Günstig ist es, wenn beim Zerkleinern der Batterien flüssiger Stickstoff zugegeben wird. Das kühlt die Batterien, die Zerkleinerungsmaschine und das Zerkleinerungsgut und verdrängt zudem Sauerstoff und Wasserdampf aus der Atmosphäre.

Günstig ist es, wenn das Zerkleinern bei dem Wasserdampf-Partialdruck von höchstens 20 Pa und/oder einem Sauerstoff-Partial von höchstens 40 hPa, insbesondere höchstens 15 hPa erfolgt.

Gemäß einer bevorzugten Ausführungsform umfasst das Verfahren die Schritte eines Entnehmens des Zerkleinerungsguts aus dem Transportbehälter, eines Abtrennens von Hartteilen und/oder eines Separierens von Aktivmaterial vom Träger, insbesondere durch eine zweite Zerkleinerungsstufe und/oder Luftstrahlsieben, sodass eine Aktivmaterialfraktion und eine Trägerfaktion entstehen, und eines getrennten Verpackens von Aktivmaterialfraktion und Trägerfraktion in jeweilige Transportbehältnisse. Günstig ist es, wenn diese Transportbehältnisse luftdicht ausgebildet sind. Durch das Trennen von Aktivmaterialfraktion und Trägerfraktion ist ein Transport in der Regel ohne Genehmigungen möglich. Ein weiterer Vorteil ist, dass derartig getrennte Fraktionen nur eine geringe Gefährdung darstellen.

Das Entnehmen des Zerkleinerungsguts aus dem Transportbehälter erfolgt vorzugsweise unter Vakuum und/oder unter Schutzgas.

Es ist möglich, nicht aber notwendig, dass das Zerkleinerungsgut unter Vakuum in den Transportbehälter abgefüllt wird. Günstig ist es, wenn der Transportbehälter ein Vakuumbehälter ist, insbesondere ein evakuierter Vakuumbehälter, sodass im Transportbehälter nach dem Verschließen ein Unterdruck oder Vakuum herrscht. Alternativ kann der Transportbehälter mit einem Inertgas gefüllt werden.

In einer bevorzugten Batterie-Verarbeitungsanlage sind die Trennungseinheit und die Trockenvorrichtung in einem gemeinsamen Standard-Container angeordnet. Das hat den Vorteil, dass die Batterie-Verarbeitungsanlage besonders einfach transportiert werden kann.

Die Trockenvorrichtung ist eingerichtet zum Trocknen des Zerkleinerungsguts für eine so lange Zeit, bis ein Elektrolytgehalt so klein ist, dass eine elektrochemische Reaktion unmöglich ist. Wird die Trockenvorrichtung im Chargenbetrieb betrieben, was eine mögliche Ausführungsform darstellt, so wird das Trocknen beispielsweise für eine vorgegebene Zeitspanne durchgeführt. Alternativ oder zusätzlich wird der Gehalt an organischen Substanzen, beispielsweise an organischen Carbonaten, in der Atmosphäre in der Trockenvorrichtung kontinuierlich gemessen und das Trocknen beendet, wenn eine vorgegebene Schwellen-Konzentration unterschritten wird.

Gemäß einer bevorzugten Ausführungsform umfasst die Batterie-Verarbeitungsanlage, insbesondere die Vakuumanlage, einen Kondensator, der eingerichtet ist zum Kondensieren von organischen Bestandteilen der Atmosphäre im Trockner, insbesondere von organischen Carbonaten, beispielsweise von Dimethylcarbonat, Ethylmethylcarbonat und/oder Ethylencarbonat. Vorzugsweise ist der Kondensator in Materialflussrichtung vor einer Vakuumpumpe angeordnet, mittels der der Trockner evakuiert wird. Günstig ist es, wenn der Kondensator gekühlt ist, vorzugsweise auf eine Temperatur von höchstens 90°C, vorzugsweise höchstens 80°C, insbesondere höchstens 70°C. Um den Kühlaufwand klein zu halten wird der Kondensator, sofern er gekühlt wird, auf eine Temperatur von zumindest -10°C, insbesondere zumindest 10 °C, gekühlt.

Günstig ist es, wenn die Trockenvorrichtung ein Rührwerkzeug aufweist, beispielsweise einen Ankerrührer oder einen Stabrührer, dessen Rührstäbe quer zu einer Rührwelle angebracht sein können. Alternativ oder zusätzlich ist das Rührwerkzeug ein externes Rührwerkzeug, das den Trockner als Ganzes bewegt.

Erfindungsgemäß besitzt die Batterie-Verarbeitungsanlage eine Vakuumanlage, die mit der Trockenvorrichtung zum Erzeugen eines Vakuums in der Trockenvorrichtung verbunden ist. Besonders günstig ist es, wenn auch die Vakuumanlage im Standard-Container angeordnet ist. Bei dem Standard-Container handelt es sich vorzugsweise um einen Container nach ISO-Norm 668, vorzugweise um einen 40-Fuß-Container oder einen 20-Fuß-Container.

Beispielweise umfasst die Vakuumanlage eine Strahlpumpe, bei der ein Strahlmedium zum Erzeugen des Unterdrucks verwendet wird.

Vorzugsweise umfasst die Batterie-Verarbeitungsanlage eine Hartmetallabtrennvorrichtung und/oder eine Leichtfraktionabtrennvorrichtung , eine Separiervorrichtung, insbesondere eine Klassiervorrichtung, zum Separieren von Aktivmaterial vom Träger, insbesondere durch eine zweite Zerkleinerungsstufe und/oder Luftstrahlsieben, sodass eine Aktivmaterialfraktion und eine Trägerfraktion entsteht, und eine zweite Abfüllvorrichtung zum getrennten Abfüllen von Aktivmaterialfraktion und Trägerfraktion. Günstig ist es, wenn diese Abfüllvorrichtung zum Abfüllen unter Unterdruck und/oder unter Inertgas ausgebildet ist.

Unter einer Hartmetallabtrennvorrichtung wird insbesondere eine Vorrichtung zur Abtrennung von Fragmenten peripherer Bestandteile des Betriebssystems, der Batteriezellhülle und der Strom-Kontakte verstanden. Beispielsweise umfasst die Hartmetallabtrennvorrichtung eine Magnetseparationsvorrichtung und/oder einen Sichter, insbesondere einen Querstromsichter und/oder einen Zickzack-Sichter. Unter der Separiervorrichtung wird insbesondere eine Vorrichtung zum zur Abtrennen der Separatorfolie verstanden.

Die Leichtfraktionabtrennvorrichtung umfasst vorzugsweise einen Zickzack-Sichter und/oder einen Lufttrenner, wobei es günstig ist, wenn die Luft im Kreislauf geführt wird. Das reduziert die Staubexposition der Umwelt mit gesundheitsschädlichem Staub.

Vorzugsweise sind die zweite Abfüllvorrichtung und die Separiervorrichtungen in einem gemeinsamen Standard-Container angeordnet, beispielsweise im oben beschrieben ersten Standard-Container, oder einem zweiten Standard-Container. Günstig ist es, wenn der Container staubdicht gekapselt ist.

Vorzugsweise umfasst die Batterie-Verarbeitungsanlage eine Schleuse zwischen der Zerkleinerungseinheit und der Inaktivierungsvorrichtung, insbesondere der Trocknungsvorrichtung. Beispielsweise handelt es sich um eine Zellenradschleuse. Durch die Schleuse wird der Sauerstoffeintrag in die Inaktivierungsvorrichtung, insbesondere die Trocknungsvorrichtung, vermindert.

Im Folgenden wird die Erfindung anhand der beigefügten Zeichnungen näher erläutert. Dabei zeigt
- Figur 1: ein Ablaufdiagramm eines erfindungsgemäßen Verfahrens,
- Figur 2: einen Querschnitt durch eine erfindungsgemäße Batterie-Verarbeitungsanlage und
- Figur 3: einen Querschnitt durch weitere, optionale Bestandteile einer erfindungsgemäßen Batterie-Verarbeitungsanlage.

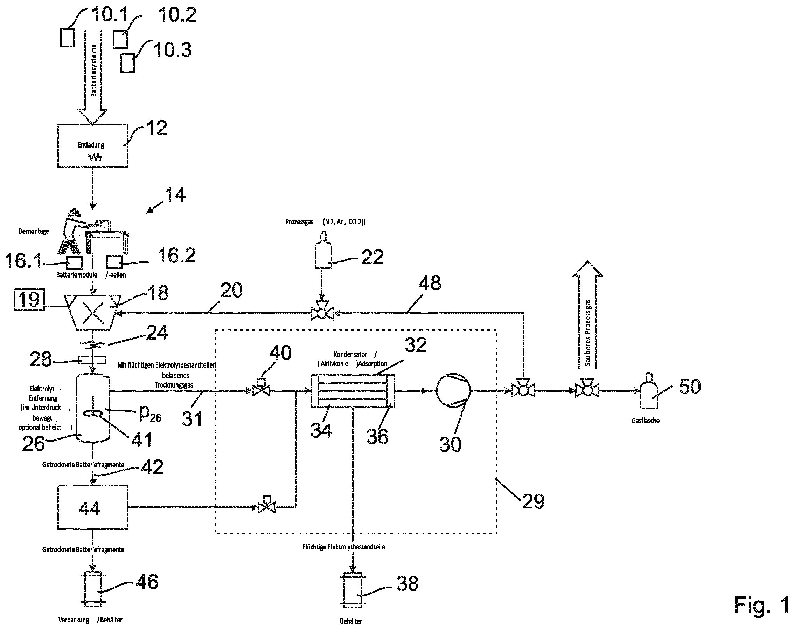

Figur 1 zeigt das Ablaufdiagramm eines erfindungsgemäßen Verfahrens. Zunächst werden Batterien 10.1, 10.2, ..., insbesondere Batteriesysteme bestehend aus mehreren Batteriemodulen oder Batteriestacks, welche wiederum aus mehreren Batteriezellen bestehen, in einer Entladeeinheit 12 entladen. Danach folgt an einer Demontagestation 14 die Demontage der Batterien 10, wenn diese erforderlich ist, weil die Batteriesysteme ansonsten aus geometrischen oder gravimetrischen Gründen nicht in die Zerkleinerungseinheit befördert werden können. Dazu werden die Batteriesysteme geöffnet und soweit demontiert, dass die Module/Stacks einzeln entfernt werden können. Gegebenenfalls können auch die Zellen von der Ansteuerelektronik getrennt werden. Die entstehenden Untereinheiten (Module/Stacks) und/oder Zellen 16.1, 16.2, ... werden einer Zerkleinerungseinheit 18 zugeführt, die beispielsweise eine Rotorschere mit einem Rotor und einen mit Statoren oder mehreren Rotoren, oder eine Schneidmühle mit einem Rotor und mehreren Rotoren umfasst.

Die Zerkleinerungseinheit 18 zerkleinert die Batterien 10 unter Schutzgas 20, das beispielsweise einer Schutzgasflasche entnommen wird. Alternativ oder zusätzlich kann flüssiger Stickstoff aus einer Flüssigstickstoffquelle 19 zugedüst werden. Bei dem Schutzgas kann es sich beispielsweise um Stickstoff, ein Edelgas, Kohlendioxid, Lachgas oder ein sonstiges, vorzugweise nicht giftiges Gas handeln.

Beim Zerkleinern entsteht Zerkleinerungsgut 24, das einer Inaktivierungsvorrichtung in Form einer Trockenvorrichtung 26 zugeführt wird. Zwischen der Zerkleinerungseinheit 18 und der Trockenvorrichtung 26 ist eine Schleuse 28 angeordnet, die soweit gasdicht ist, dass die Druckvorrichtung 26 in guter Näherung von der Zerkleinerungseinheit 18 gasdicht getrennt ist.

Die Trockenvorrichtung 26 ist mit einer Vakuumanlage 29 verbunden, die eine Vakuumpumpe 30 aufweist und ein Vakuum erzeugt. In der Trockenvorrichtung 26 herrscht ein Druck p₂₆ von p₂₆ ≈ 100 hPa, vorzugsweise 50 hPa. Es sei darauf hingewiesen, dass im Rahmen der vorliegenden Beschreibung unter einer Vakuumpumpe insbesondere ganz allgemein eine Vorrichtung verstanden wird, die ein Vakuum erzeugt. Es ist dabei möglich und bevorzugt, nicht aber notwendig, dass die Vakuumpumpe gleichzeitig als Verdichter wirkt, so dass von ihr Gas unter einem Druck abgegeben wird, der größer ist als der Umgebungsdruck.

In dem in Figur 1 gezeigten Fall handelt es sich bei der Vakuumpumpe um einen Verdichter, der Gas 31, das in der Trockenvorrichtung 26 vorliegt, ansaugt und verdichtet. Alternativ oder zusätzlich kann die Vakuumanlage 29 eine Strahlpumpe aufweisen, bei der ein Strahlmedium in Form einer Flüssigkeit mit hoher Geschwindigkeit durch Venturi-Düse geleitet wird. Das Strahlmedium ist alkalisch und hat einen pH-Wert von zumindest pH 13 und ist beispielsweise eine 10%ige Kaliumhydroxidlösung.

Die Vakuumanlage 29 umfasst eine Gasreinigungsvorrichtung 32, die zwischen der Trockenvorrichtung 26 und der Vakuumpumpe 30 angeordnet ist und die im vorliegenden Fall einen Kondensator 34 und/oder einen Aktivkohlefilter 36 umfasst. Der Kondensator wird bei einer Temperatur von -10 °C betrieben, so dass Kohlensäuredimethylester und Kohlensäureethylmethylester kondensieren und in einen Kondensatbehälter 38 abgegeben werden können. Zudem wird etwaig vorhandenes Wasser ausgefroren. Ein Steuerventil 40 ist ausgebildet zum Öffnen, wenn der Druck p₂₆ zu groß wird und zum Zufahren, wenn der Druck p₂₆ zu klein wird, das heißt, dass ein vorgegebener Schwellenwert unterschritten wird.

Vorzugsweise ist das Trocknungsgut während der Trocknung bewegt. Dies kann beispielsweise durch Rühren mit einem Rührwerkzeug 41, wie einem Ankerrührer oder einem Stabrührer mit senkrecht zur Rührwelle angebrachten Stäben passieren. Alternativ durch einen bewegten Trocknungsbehälter.

Durch das Trocknen des Zerkleinerungsguts entsteht inaktiviertes Zerkleinerungsgut 42, das einer Abfüllvorrichtung 44 zugeführt wird. Dort wird das inaktivierte Zerkleinerungsgut 42 unter Vakuum und/oder unter Schutzgas in einen Transportbehälter 46 abgefüllt. Der Transportbehälter 46 ist vorzugsweise gasdicht. Es ist möglich, nicht aber notwendig, dass der Transportbehälter 46 vor dem Abtransport mit Inertgas aufgefüllt wird, so dass er unter Normaldruck steht. Alternativ ist es auch möglich, dass der Transportbehälter unter Vakuum verschlossen und transportiert wird. Es ist möglich, dass alternativ zum Transportbehälter eine vakuumverschweißte Folie, beispielsweise eine Aluminiumverbundfolie, gewählt wird.

Über eine Spülleitung 48 wird der Zerkleinerungseinheit 18 Schutzgas 20 von der Vakuumpumpe 30 zugeführt. Arbeitet die Vakuumpumpe 30 wie im vorliegenden Fall, der eine bevorzugte Ausführungsform darstellt, zudem als Kompressor, kann das Schutzgas auf eine Druckgasflasche 50 gezogen werden. Alternativ oder zusätzlich kann das Schutzgas 20, gegebenenfalls nach zusätzlicher Reinigung, in die Umgebung abgegeben werden.

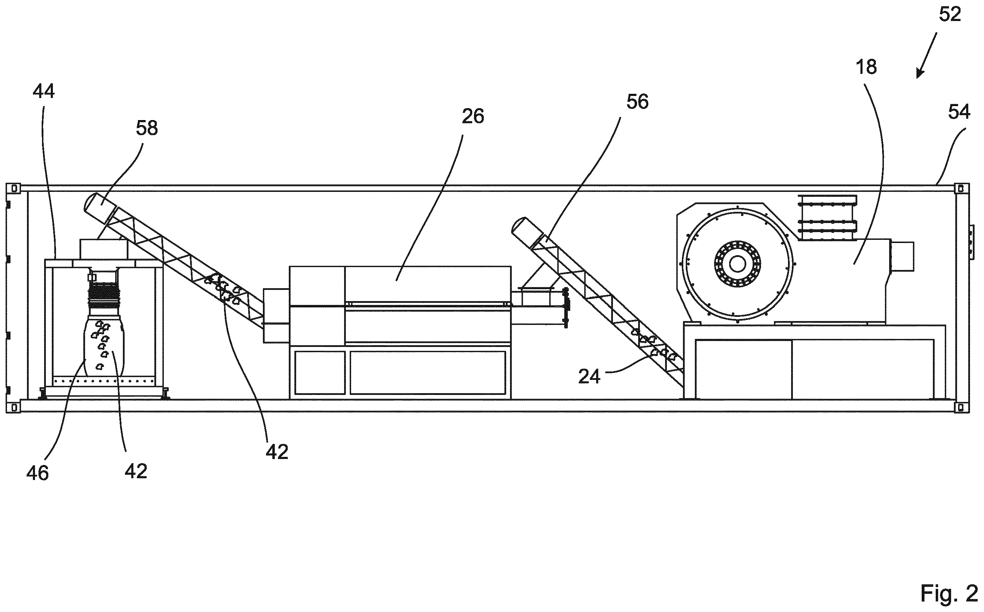

Figur 2 zeigt schematisch einen Querschnitt durch eine erfindungsgemäße Batterie-Verarbeitungsanlage 52, die einen Standard-Container 54 aufweist, in dem die Zerkleinerungseinheit 18, die Trockenvorrichtung 26 und die Abfüllvorrichtung 44 angeordnet sind. Hinter der Zerkleinerungseinheit 18 ist ein erster gasdichter Förderer 56 angeordnet, der beispielsweise eine Förderschnecken oder einen Rohrkettenförderer umfasst. Der erste Förderer 56 fördert das Zerkleinerungsgut 24 zur Trockenvorrichtung 26, die mit der in Figur 2 nicht sichtbaren Vakuum-Erzeugungsvorrichtung verbunden ist. In Materialstromrichtung hinter der Trockenvorrichtung 26 ist ein zweiter Förderer 58 angeordnet, der vorzugsweise ebenfalls gasdicht ausgebildet ist und eine Förderschnecke oder einen Rohrkettenförderer enthalten kann. Der zweite Förderer fördert das inaktivierte Zerkleinerungsgut 42 zur Abfüllvorrichtung 44.

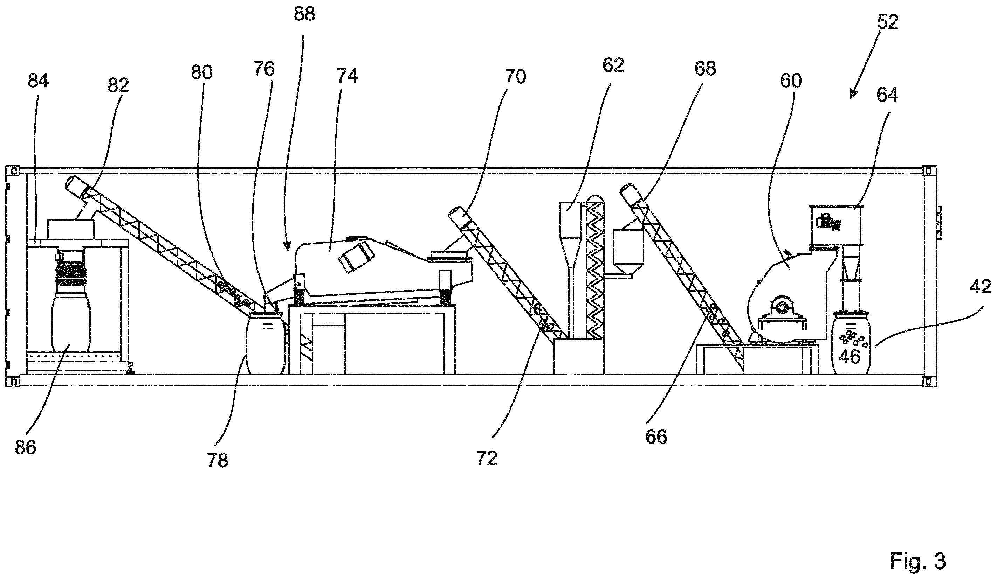

Figur 3 zeigt optionale, in der vorliegenden Ausführungsform vorhandene Einheiten der erfindungsgemäßen Batterie-Verarbeitungsanlage 52, die einen Aufschlusszerkleinerer 60 sowie einen Sichter 62 umfasst. Der Aufschlusszerkleinerer 60 enthält eine Transportbehälter-Entleervorrichtung 64, mittels der aus dem Transportbehälter 46 inaktiviertes Zerkleinerungsgut 42 entnommen werden kann. Der Aufschlusszerkleinerer 60 erzeugt Aufschlussmaterial 66, das dem Sichter 62 zugeführt wird. Es kann sich bei dem Sichter beispielsweise um einen Zickzack-Sichter handeln.

Erfindungsgemäß umfasst die Batterie-Verarbeitungsanlage 52 einen Zerkleinerer, der vorzugsweise im Materialfluss vor der Klassiervorrichtung 74 steht und ein schnell laufendes Zerkleinerungswerkzeug enthält, wobei eine Rotorumfangsgeschwindigkeit größer ist als 1 m/s, vorzugsweise größer als 10 m/s. Dieser Zerkleinerer zerkleinert das Zerkleinerungsmaterial und beansprucht es mechanisch so, dass sich die elektrochemisch aktive Beschichtung mindestens teilweise vom Träger löst. Das Vorhandensein eines solchen Zerkleinerer ist ein allgemeines bevorzugtes Merkmal einer erfindungsgemäßen Batterie-Verarbeitungsanlage.

Im Sichter entstehen eine Leichtfraktion mit Separatorfolie und feinem Beschichtungsmaterial und eine Schwergutfraktion mit Trägerfolien (Aluminium- und Kupfer) mit größerem leicht anhaftender Beschichtung. Beide Fraktionen werden auf jeweils ein Sieb zur weiteren Trennung in Beschichtung und Separatorfolie beziehungsweise Beschichtung und Metallfolien gegeben. Die entstehenden Fraktionen werden getrennt weiter verarbeitet.

Das Aufschlussmaterial 66 wird dem Sichter 62 mittels einem dritten Förderer 68 zugeführt. Ein vierter Förderer 70 führt gesichtetes Material 72, insbesondere das Material der Leichtfraktion, das den Sichter 62 verlässt, einer Klassiervorrichtung 74 zu. Die Klassiervorrichtung 74 umfasst vorzugsweise ein Luftstrahlsieb, das gleichzeitig als Trennvorrichtung zum Trennen des Aktivmaterials von dem Träger fungiert. Durch das Trennen entsteht eine Aktivmaterialfraktion 76, die in ein Transportbehältnis 78 abgefüllt wird.

Es entsteht zudem eine Trägerfraktion 80, die in der vorliegenden Ausführungsform mit einem fünften Förderer 82 einer Abfülleinheit 84 zugeführt wird, die die Trägerfraktion 80 in einen Behälter 86 füllt. Die Abfülleinheit 84 ist zusammen mit einer zweiten Abfülleinheit 88 Teil einer zweiten Abfüllvorrichtung.

### Bezugsleistenliste

| | | | |
|---|---|---|---|
| 10 | Batterie | 50 | Druckgasflasche |
| 12 | Entladeeinheit | 52 | Batterie-Verarbeitungsanlage |
| 14 | Demotagesstation | 54 | Standard-Container |
| 16 | Zelle | 56 | erster Förderer |
| 18 | Zerkleinerungseinheit | 58 | zweiter Förderer |
| 19 | Flüssigstickstoffquelle | | |
| | | 60 | Aufschlusszerkleinerer |
| 20 | Schutzgas | 62 | Sichter |
| 22 | Schutzgasflasche | 64 | Transportbehälter-Entleervorrichtung |
| 24 | Zerkleinerungsgut | | |
| 26 | Trockenvorrichtung | 66 | Aufschlussmaterial |
| 28 | Schleuse | 68 | dritter Förderer |
| 29 | Vakuumanlage | | |
| | | 70 | vierter Förderer |
| 30 | Vakuumpumpe | 72 | gesichtetes Material |
| 31 | Gas | 74 | Klassiervorrichtung |
| 32 | Gasreinigungsvorrichtung | 76 | Aktivmaterialfraktion |
| 34 | Kondensator | 78 | Transportbehältnis |
| 36 | Aktivkohlefilter | | |
| 38 | Kondensatbehälter | 80 | Trägerfraktion |
| | | 82 | fünfter Förderer |
| 40 | Steuerventil | 84 | Abfülleinheit |
| 41 | Rührwerkzeug | 86 | Behälter |
| 42 | inaktives Zerkleinerungsgut | 88 | zweite Abfülleinheit |
| 44 | Abfüllvorrichtung | | |
| 46 | Transportbehälter p | p | Druck |
| 48 | Spülleitung | | |

## Patentansprüche

1. Verfahren zum Behandeln gebrauchter Batterien (10), insbesondere Lithium-Batterien, mit den Schritten:
(a) Zerkleinern der Batterien (10), sodass Zerkleinerungsgut (24) erhalten wird, und
(b) Inaktivieren des Zerkleinerungsguts (24), sodass ein inaktiviertes Zerkleinerungsgut (42) erhalten wird,
(c) wobei das Inaktivieren durch Trocknen des Zerkleinerungsguts (24) bei höchstens 80°C und höchstens 300 hPa erfolgt, **gekennzeichnet durch** den Schritt
(d) Abfüllen des inaktivierten Zerkleinerungsguts (42) in einen Transportbehälter (46),
(e) wobei das Gas, das beim Trocknen entsteht, gereinigt wird, bevor es eine Vakuumpumpe erreicht, indem das Gas einen Aktivkohlefilter und/oder einen Filter passiert, in dem mit Fluorwasserstoff reagierende Substanzen enthalten sind,
(f) wobei das Zerkleinerungsgut (24) solange getrocknet wird, bis ein Elektrolytgehalt so klein ist, dass eine elektrochemische Reaktion unmöglich ist und
(g) wobei das Trocknen nach dem Zerkleinern der Batterien erfolgt.

2. Verfahren nach Anspruch 1, **dadurch gekennzeichnet, dass** das Trocknen unter Vakuum erfolgt, das so groß gewählt ist, dass der Dampfdruck von Kohlensäuredimethylester bei 70°C unterschritten wird.

3. Verfahren nach einem der vorstehenden Ansprüche, **dadurch gekennzeichnet, dass**
(a) die Lithium-Batterien (10) ein Lösungsmittel eines Leitsalzes enthalten und
(b) das Trocknen ein Entfernen des Lösungsmittels ist und
(c) das Trocknen bei einer so niedrigen Temperatur durchgeführt wird, dass die Bildung von Fluorwasserstoff behindert wird.

4. Verfahren nach einem der vorstehenden Ansprüche, **dadurch gekennzeichnet, dass**
(a) das Trocknen unter einem Druck von höchstens 100 hPa erfolgt und
(b) dem Zerkleinerungsgut beim Trocknen so viel Elektrolyt entzogen wird, dass sich keine entzündliche oder explosive Gasphase über den Batteriefragmenten bildet.

5. Verfahren nach einem der vorstehenden Ansprüche, **gekennzeichnet durch** die Schritte:
(h) Entnehmen des inaktivierten Zerkleinerungsguts (42) aus dem Transportbehälter (46),
(i) Abtrennen von Hartteilen und/oder
Separieren von Aktivmaterial vom Träger, insbesondere durch Luftstrahlsieben oder durch eine zweite Zerkleinerungsstufe, sodass eine Aktivmaterialfraktion (76) und eine Trägerfraktion (80) entsteht, und
(j) getrenntes Verpacken von Aktivmaterialfraktion (76) und Trägerfraktion (80) in Transportbehältnisse (78).

6. Verfahren nach einem der vorstehenden Ansprüche, **dadurch gekennzeichnet, dass** das Trocknen des Zerkleinerungsguts erst beendet wird, wenn sich nach Beenden des Trocknens kein entzündliches oder explosives Gasgemisch über dem abgefüllten Zerkleinerungsgut mehr bilden kann und/oder wenn das Zerkleinerungsgut so trocken ist, dass sich im Transportbehälter oder während der Weiterverarbeitung kein entzündliches oder explosives Gasgemisch ergeben kann.

7. Batterie-Verarbeitungsanlage zum Behandeln gebrauchter Batterien, insbesondere Lithium-Batterien, mit:
(a) einer Zerkleinerungseinheit (18) zum Zerkleinern der Batterien (10), sodass Zerkleinerungsgut (24) erhalten wird,
(b) einer Inaktivierungsvorrichtung in Form einer Trockenvorrichtung (26), die nicht die Zerkleinerungseinheit ist, zum Inaktivieren des Zerkleinerungsguts (24),
**gekennzeichnet durch**
(c) einer Abfüllvorrichtung (44) zum Abfüllen des inaktivierten Zerkleinerungsguts (42) in einen Transportbehälter (46),
(d) die Batterie-Verarbeitungsanlage eine Vakuumanlage, die mit der Trockenvorrichtung (26) zum Erzeugen eines Vakuums in der Trockenvorrichtung (26) verbunden ist, aufweist,
(e) wobei die Trockenvorrichtung (26) eingerichtet ist zum Trocknen des Zerkleinerungsguts (24) solange, bis ein Elektrolytgehalt so klein ist, dass eine elektrochemische Reaktion unmöglich ist,
(f) eine Vakuumanlage, die mit der Trockenvorrichtung (26) zum Erzeugen eines Vakuums in der Trockenvorrichtung (26) verbunden ist und eine Vakuumpumpe (30) und eine Gasreinigungsvorrichtung (32), die zwischen der Trockenvorrichtung (26) und der Vakuumpumpe (30) angeordnet ist, und einen Kondensator (34) zum Kondensieren von Elektrolyt umfasst,
(k) einen Aktivkohlefilter (36) und/oder einen Filter, in dem mit Fluorwasser-
stoff reagierende Substanzen enthalten sind, die so angeordnet sind, dass das Gas, das beim Trocknen entsteht, den Aktivkohlefilter und/oder den Filter passieren und gereinigt werden, bevor es die Vakuumpumpe (30) erreicht.

8. Batterie-Verarbeitungsanlage nach Anspruch 7, **gekennzeichnet durch**
- eine Hartmetallabtrennvorrichtung und/oder eine Leichtfraktionsabtrennvorrichtung,
- eine Separiervorrichtung, insbesondere eine Klassiervorrichtung (74), zum Separieren von Aktivmaterial vom Träger, insbesondere durch Luftstrahlsieben und/oder durch eine zweite Zerkleinerungsstufe, sodass eine Aktivmaterialfraktion (76) und eine Trägerfraktion entsteht, insbesondere Aluminium- und Kupferfolien, und
- eine zweite Abfüllvorrichtung (44) zum getrennten Abfüllen von Aktivmaterialfraktion (76) und Trägerfraktion (80), insbesondere Aluminium- und Kupferfolien.

9. Batterie-Verarbeitungsanlage nach Anspruch 7 oder 8, **gekennzeichnet durch** eine Schleuse (28) zwischen der Zerkleinerungseinheit und der Inaktivierungsvorrichtung.

## Claims

1. A method for treating used batteries (10), especially lithium batteries, comprising the steps:
(a) comminuting the batteries (10), thereby obtaining comminuted material (24), and
(b) deactivating the comminuted material (24), thereby obtaining deactivated comminuted material (42),
(c) wherein deactivation is achieved by drying the comminuted material (24) at a maximum of 80°C and a maximum of 300 hPa,
**characterised by** the step
(d) filling a transport container (46) with the deactivated comminuted material (42),
(e) wherein the gas produced by drying is purified before reaching a vacuum pump by passing the gas through an activated carbon filter and/or a filter containing substances that react with hydrogen fluoride,
(f) wherein the comminuted material (24) is dried until an electrolyte content is so low that an electrochemical reaction is impossible, and
(g) wherein drying is carried out after comminuting the batteries.

2. The method according to claim 1, **characterised in that** drying is carried out under a vacuum selected to be such that the vapour pressure of carbon dioxide dimethyl ester at 70°C is not reached.

3. The method according to one of the preceding claims, **characterised in that**
(a) the lithium batteries (10) contain a solvent of conducting salt and
(b) drying constitutes a removal of the solvent and
(c) drying is carried out at such a low temperature it constricts the formation of hydrogen fluoride.

4. The method according to one of the preceding claims, **characterised in that**
(a) drying occurs at a pressure of at most 100 hPa and
(b) so much electrolyte is removed from the comminuted material during drying that no flammable or explosive gas phase forms above the battery fragments.

5. The method according to one of the preceding claims, **characterised by** the steps:
(h) removing the deactivated comminuted material (42) from the transport container (46),
(i) separating hard parts and/or
separating active material from the carrier, in particular by means of air jet sieving or a second comminution stage, thereby obtaining an active material fraction (76) and a carrier fraction (80), and
(j) separately packing the active material fraction (76) and the carrier fraction (80) in transport containers (78).

6. A method according to one of the preceding claims, **characterised in that** the drying of the comminuted material is only terminated if, upon termination of the drying, a flammable or explosive gas mixture can no longer form above the filled comminuted material and/or if the comminuted material is so dry that no flammable or explosive gas mixture can develop in the transport container or during further processing.

7. A battery processing system for treating used batteries, especially lithium batteries, with:
(a) a comminution unit (18) for comminuting the batteries (10), thereby obtaining comminuted material (24),
(b) a deactivation device (26) in the form of a drying device (26), which is not the comminution unit, for deactivating the comminuted material (24),
**characterised by**
(c) a filling device (44) for filling a transport container (46) with the deactivated comminuted material (42),
(d) the battery processing device comprises a vacuum system that is connected to the drying device (26) for creating a vacuum in the drying device (26) and,
(e) wherein the drying device (26) is configured to dry the comminuted material (24) until an electrolyte content is so low that an electrochemical reaction is impossible,
(f) a vacuum system that is connected to the drying device (26) for creating a vacuum in the drying device (26) and
a vacuum pump (30) and gas purification device (32), which is arranged between the drying device (26) and the vacuum pump (30), and a condenser (34) for condensing electrolyte,
(k) an activated carbon filter (36) and/or a filter containing substances that react with hydrogen fluoride that are arranged in such a way that the gas produced during drying passes through the activated carbon filter and/or the filter and is purified before reaching the vacuum pump (30).

8. The battery processing system according to claim 7, **characterised by**
- a hard metal separation device and/or a light fraction separation device,
- a separating device, in particular a classification device (74), for separating active material from the carrier, in particular by means of air jet sieving and/or a second comminution stage, thereby obtaining an active material fraction (76) and a carrier fraction, in particular aluminium and copper foils, and
- a second filling device (44) for separately filling the active material fraction (76) and the carrier fraction (80), in particular aluminium and copper foils.

9. The battery processing system according to claim 7 or 8, **characterised by** an airlock (28) between the comminution unit and the deactivation device.

## Revendications

1. Procédé de traitement de batteries (10) usagées, en particulier de batteries au lithium, comprenant les étapes consistant à :
(a) broyer les batteries (10) de manière à obtenir un matériau broyé (24), et
(b) inactiver le matériau broyé (24) de manière à obtenir un matériau broyé inactivé (42),
(c) l'inactivation étant effectuée par séchage du matériau broyé (24) à une température maximale de 80 °C et une pression maximale de 300 hPa,
**caractérisé par** l'étape consistant à
(d) conditionner le matériau broyé inactivé (42) dans un récipient de transport (46),
(e) sachant que le gaz produit lors du séchage est épuré avant d'atteindre une pompe à vide, en faisant passer le gaz à travers un filtre à charbon actif et/ou un filtre contenant des substances réagissant avec le fluorure d'hydrogène,
(f) sachant que le matériau broyé (24) est séché jusqu'à ce que la teneur en électrolyte soit suffisamment faible pour rendre impossible toute réaction électrochimique, et
(g) sachant que le séchage s'effectue après le broyage des batteries.

2. Procédé selon la revendication 1, **caractérisé en ce que** le séchage s'effectue sous vide qui est choisi suffisamment important pour ne pas dépasser la pression de vapeur de l'ester diméthylique de l'acide carbonique à 70 °C.

3. Procédé selon l'une des revendications précédentes, **caractérisé en ce que**
(a) les batteries au lithium (10) contiennent un solvant d'un sel conducteur, et
(b) le séchage consiste en une élimination du solvant, et
(c) le séchage est effectué à une température suffisamment basse pour empêcher la formation de fluorure d'hydrogène.

4. Procédé selon l'une des revendications précédentes, **caractérisé en ce que**
(a) le séchage s'effectue sous une pression maximale de 100 hPa, et
(b) une quantité suffisante d'électrolyte est éliminée du matériau broyé pendant le séchage afin d'empêcher la formation d'une phase gazeuse inflammable ou explosive au-dessus des fragments de batterie.

5. Procédé selon l'une des revendications précédentes, **caractérisé par** les étapes consistant à :
(h) enlever le matériau broyé inactivé (42) hors du récipient de transport (46),
(i) séparer les parties dures et/ou séparer la matière active du support, en particulier par tamisage à jet d'air ou par un deuxième étage de broyage, de manière à obtenir une fraction de matière active (76) et une fraction de support (80), et
(j) conditionner séparément la fraction de matière active (76) et la fraction de support (80) dans des récipients de transport (78).

6. Procédé selon l'une des revendications précédentes, **caractérisé en ce que** le séchage du matériau broyé n'est achevé que lorsque, après l'achèvement du séchage, aucun mélange gazeux inflammable ou explosif ne puisse se former au-dessus du matériau broyé conditionné et/ou lorsque le matériau broyé est si sec qu'aucun mélange gazeux inflammable ou explosif ne puisse se former dans le récipient de transport ou pendant le traitement ultérieur.

7. Installation de traitement de batteries destinée à traiter des batteries usagées, en particulier des batteries au lithium, comprenant :
(a) une unité de broyage (18) destinée à broyer les batteries (10) de manière à obtenir un matériau broyé (24),
(b) un dispositif d'inactivation sous la forme d'un dispositif de séchage (26), distinct de l'unité de broyage, destiné à inactiver le matériau broyé (24),
**caractérisée par**
(c) un dispositif de conditionnement (44) destiné à conditionner le matériau broyé inactivé (42) dans un récipient de transport (46),
(d) l'installation de traitement de batteries comportant un système de vide relié au dispositif de séchage (26) pour créer un vide dans le dispositif de séchage (26),
(e) le dispositif de séchage (26) étant agencé pour sécher le matériau broyé (24) jusqu'à ce que la teneur en électrolyte soit suffisamment faible pour rendre impossible toute réaction électrochimique,
(f) un système de vide qui est relié au dispositif de séchage (26) pour créer un vide dans le dispositif de séchage (26) et qui comprend une pompe à vide (30), un dispositif d'épuration des gaz (32), disposé entre le dispositif de séchage (26) et la pompe à vide (30), et un condenseur (34) destiné à condenser l'électrolyte,
(g) un filtre à charbon actif (36) et/ou un filtre contenant des substances réagissant avec le fluorure d'hydrogène, disposés de telle sorte que le gaz produit lors du séchage traverse le filtre à charbon actif et/ou le filtre et soit épuré avant d'atteindre la pompe à vide (30).

8. Installation de traitement de batteries selon la revendication 7, **caractérisée par**
- un dispositif de séparation des métaux durs et/ou un dispositif de séparation des fractions légères,
- un dispositif de séparation, en particulier un dispositif de classification (74), destiné à séparer la matière active du support, en particulier par tamisage à jet d'air et/ou par un deuxième étage de broyage, de manière à obtenir une fraction de matière active (76) et une fraction de support, notamment des feuilles d'aluminium et de cuivre, et
- un deuxième dispositif de conditionnement (44) destiné à conditionner séparément la fraction de matière active (76) et la fraction de support (80), notamment des feuilles d'aluminium et de cuivre.

9. Installation de traitement de batteries selon la revendication 7 ou 8, **caractérisée par** un sas (28) situé entre l'unité de broyage et le dispositif d'inactivation.
